# EUROPÄISCHE PATENTSCHRIFT

(11) **EP 1 590 212 B1**
(45) Veröffentlichungstag und Bekanntmachung des Hinweises auf die Patenterteilung: **14.06.2006**
(21) Anmeldenummer: 04706166.8
(22) Anmeldetag: 29.01.2004
(51) Int. Cl.: B60R 22/46, B60R 22/36

(54) **ENDBESCHLAGSTRAFFER**
TENSIONING DEVICE OF AN END-FITTING
DISPOSITIF DE TENSION D'ARMATURE D'EXTREMITE

(30) Priorität: 06.02.2003 DE 10304943
(43) Veröffentlichungstag der Anmeldung: 02.11.2005
(73) Patentinhaber: AUTOLIV DEVELOPMENT AB, 447 83 Vargarda (SE)
(72) Erfinder: SINGER, Klaus-Peter, 22399 Hamburg (DE)
(74) Vertreter: Müller, Karl-Ernst
(86) Internationale Anmeldenummer: PCT/EP2004/000761
(87) Internationale Veröffentlichungsnummer: WO 2004/069614

(56) Entgegenhaltungen:
- EP-A- 1 177 954
- DE-A- 3 233 969
- DE-A- 3 732 878

## Beschreibung

Die Erfindung betrifft ein Rückhaltesystem für ein Kraftfahrzeug bestehend aus einem Sicherheitsgurt, dessen eines Ende mittels eines Endbeschlagstraffers an der Fahrzeugkarosserie befestigbar ist, wobei der Endbeschlagstraffer aus einem das Ende des Sicherheitsgurtes aufnehmenden Gurtaufroller und einer daran angeschlossenen Straffvorrichtung für die Gurtwelle des Gurtaufrollers besteht, mit einer als Hohlwelle ausgebildeten Gurtwelle und einem im Gefahrenfall ausgelösten Sperrglied zur Blockierung der Gurtwelle. Ein derartiger Rückhaltesystem ist and der EP-A-1177 954 bekannt.

Ein Rückhaltesystem mit den vorgenannten Merkmalen ist ferner in der DE 43 31 027 A1 bzw. der DE 195 45 898 C2 beschrieben, bei welchem die Gurtwelle im Anschluß an die Straffbewegung unter Beaufschlagung eines in ihr integrierten Torsionsstabes in Gurtauszugsrichtung drehbar ist und somit im Sinne einer Kraftbegrenzung ein gewisses Maß an Gurtband wieder freigibt. Es ist jedoch nach wie vor wünschenswert, insbesondere bei weiteren in das Rückhaltesystem integrierten oder damit zusammenwirkenden Sicherheitskomponenten, im Anschluß an die Straffbewegung die Kraftanbindung für den angeschnallten Insassen möglichst schnell und ohne eine im Anschluß an den Straffvorgang anschließend entstehende Gurtlose sicherzustellen.

Der Erfindung liegt daher die Aufgabe zugrunde, ein Rückhaltesystem mit den gattungsgemäßen Merkmalen und somit einen Endbeschlagstraffer für eine schnelle Blockierung der Gurtwelle ohne weiteren Gurtauslaß im Anschluß an die Gurtstraffung bei einer gleichzeitig einfachen konstruktiven Ausgestaltung einzurichten.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß sich der Wellenkörper der eigentlichen Gurtwelle durch die Gehäuseschenkel des Gurtaufrollergehäuses hindurcherstreckt und in der Ebene eines Gehäuseschenkels eine Ausnehmung aufweist, dass im Inneren des hohlen Wellenkörpers ein Sperrglied schwenkbar angeordnet ist, welches mit wenigstens einem Zahn durch eine Ausnehmung über den Außenumfang des Wellenkörpers hervorsteht und von einem im Inneren des Wellenkörpers festgelegten Federelement in Eingriff in eine am zugeordneten Gehäuseschenkel des Gurtaufrollergehäuses ausgebildete Verzahnung vorgespannt ist und daß das Sperrglied so ausgebildet ist, dass es bei Drehung der Gurtwelle in Straffrichtung über die Verzahnung hinwegratscht und bei einer nach Abschluss der Straffbewegung erfolgenden Drehung der Gurtwelle in Gurtauszugsrichtung die sofortige Blockierung der Gurtwelle bewirkt. Da das Sperrglied einschließlich des dieses vorspannenden Federelements im Inneren der als Hohlwelle ausgebildeten Gurtwelle vormontierbar ist, ergibt sich in vorteilhafter Weise ein einfacher konstruktiver Aufbau der Sperrvorrichtung für die Gurtwelle.

Eine als Hohlwelle ausgebildete Gurtwelle eines Gurtaufrollers ist aus der DE 298 10 223 U1 bekannt, an deren seitlichen Enden jeweils ein Bund mit einer daran ausgebildeten Verzahnung als Blockierkontur in einer einstückigen Ausbildung angeordnet ist.

Weiterhin ist ein aus der Wellenkontur einer Gurtwelle heraus radial ausschwenkbares Sperrglied aus der DE 34 11 067 A1 bekannt.

Nach einem Ausführungsbeispiel der Erfindung ist vorgesehen, daß das mit einem Lageransatz in einer Durchbrechung des Wellenkörpers gelagerte Sperrglied sich im Eingriffszustand mit der Verzahnung des Gurtaufrollergehäuses an einem als Wellennase ausgebildeten Randbereich der Ausnehmung abstützt, wobei die Ausnehmung in Umfangsrichtung einer derartige Erstreckung aufweist, daß das Sperrglied mit seinem Zahn beim Überratschen der Verzahnung des Gurtaufrollergehäuses in die Ausnehmung eintauchen kann.

Nach einem Ausführungsbeispiel der Erfindung ist vorgesehen, daß das Sperrglied mit einer Tasche die Wellennase derart umschließt, daß die Wellennase unter Last in die Tasche einfährt und der Bewegungsspielraum zwischen Sperrglied und Wellenkörper begrenzt ist.

Zur Fixierung des Sperrgliedes an dem Wellenkörper ist zusätzlich zu der Drehlagerung des Sperrgliedes vorgesehen, daß die Wellennase einen einwärts in das Innere des Wellenkörpers vorgebogenen Krümmungsbereich aufweist. Zur besseren Abstützung der Gurtwelle bei ihrer Blockierung kann dabei vorgesehen sein, daß der Krümmungsbereich der Wellennase unter Last in das Innere des Wellenkörpers einbiegbar ausgebildet ist. Soweit bei einem Einbiegen des Krümmungsbereichs eine geringfügige radiale Verlagerung der Gurtwelle erfolgt, ist vorgesehen, daß auf dem äußeren Umfang des Wellenkörpers eine zum Eingriff der Verzahnung des Gurtaufrollergehäuses eingerichtete Blockierkontur unmittelbar in dem Wellenkörper ausgebildet ist. Bei einer solchen Ausgestaltung wird die Blockierung der Gurtwelle über das Sperrglied durch den Eingriff der Verzahnung des Gurtaufrollergehäuses in die an dem Wellenkörper ausgebildete Blockierkontur weiter unterstützt.

Zweckmäßig ist über den Umfang des Wellenkörpers verteilt eine Mehrzahl von Blockierkonturen angeordnet, wobei nach Ausführungsbeispielen der Erfindung die jeweilige Blockierkontur als eine in den Wellenkörper eingebrachte Ausnehmung oder als eine in den Wellenkörper eingeprägte Blockiersicke ausgebildet ist.

Nach einem Ausführungsbeispiel der Erfindung ist vorgesehen, daß das Sperrglied durch eine im Inneren des Wellenkörpers festgelegte Blattfeder in Eingriff mit der Verzahnung des Gurtaufrollergehäuses vorgespannt ist, wobei die Blattfeder in einer zweckmäßigen Weise in einem in das Innere des Wellenkörpers eingesetzten Halteteil festgelegt sein kann. Hierzu kann vorgesehen sein, daß das Halteteil in wenigstens einer in dem Wellenkörper ausgebildeten Ausnehmung festlegbar ist.

Über die Festlegung der Blattfeder hinaus kann dem Halteteil die Funktion einer axialen Führung des Sperrgliedes bei dessen Ratschenbewegung zugemessen sein, wozu das Halteteil U-förmig ausgebildet sein kann, so daß es zwischen seinen U-Schenkeln das Sperrglied einfaßt.

Zur symmetrischen Blockierung der Gurtwelle in dem Gurtaufrollergehäuse kann vorgesehen sein, daß jeweils in der Ebene der die Gurtwelle lagernden Gehäuseschenkel in dem Wellenkörper jeweils ein Sperrglied und an den Gehäuseschenkeln jeweils eine Verzahnung ausgebildet ist.

Hinsichtlich der Ausbildung des Wellenkörpers kann vorgesehen sein, daß der Wellenkörper aus einem als ebener Zuschnitt ausgebildeten und in einer Rolle geformten Wellenmantel gebildet ist, wobei der Wellenmantel aus einem dünnen Stahlblech bestehen kann.

In der Zeichnung ist ein Ausführungsbeispiel der Erfindung wiedergegeben, welches nachstehend beschrieben ist. Es zeigen:
- Fig. 1: einen Endbeschlagstraffer in einer Gesamtansicht,
- Fig. 2: den Wellenkörper der Gurtwelle in einer Draufsicht,
- Fig. 3: den Wellenkörper gemäß Figur 2 einschließlich Blockiervorrichtung im Schnitt,
- Fig. 4.: das Halteteil für die Blattfeder in einer Seitenansicht,
- Fig. 5: das Halteteil gemäß Figur 4 im Schnitt,
- Fig. 6: den Wellenkörper mit vormontiertem Halteteil im Schnitt,
- Fig. 7: den Gehäuseschenkel des Gurtaufrollers mit darin angeordneter Blockiervorrichtung in einer teilweise geschnittenen Seitenansicht vor Belastung der Gurtwelle,
- Fig. 8: den Gegenstand der Figur 7 während Belastung der Gurtwelle.

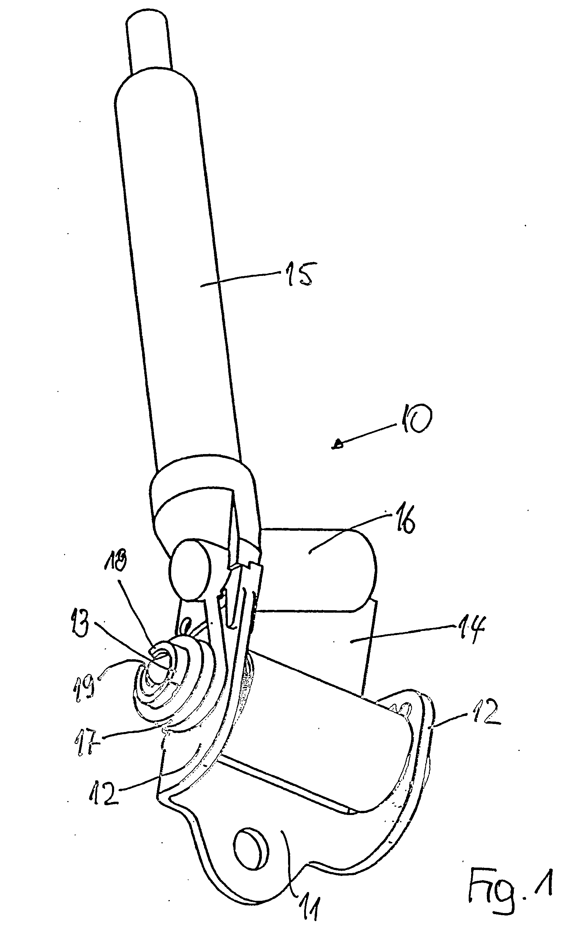

Der zunächst in Figur 1 dargestellte Endbeschlagstraffer 10 besteht aus einem U-förmigen Gurtaufrollergehäuse 11, in dessen Gehäuseschenkeln 12 eine Gurtwelle 13 gelagert ist, auf der ein Gurtband 14 aufgewickelt ist. An einem Gehäuseschenkel 12 ist eine Straffvorrichtung 15 angeschlossen, bestehend aus einem Strafferrohr, an welches eine Treibladung 16 angeschlossen ist. Die Verbindung zwischen der Straffvorrichtung 15 und der Gurtwelle 13 geschieht über ein Strafferseil 17, welches auf einem Wellenfortsatz 18 der Gurtwelle 13 aufgewickelt und mit seinem Ende in einer Seileinhängung 19 der Gurtwelle 13 befestigt ist.

Der aus Figur 2 in einer herausgezogenen Darstellung ersichtliche Wellenkörper 20 weist an einer Stelle, die bei in das Gurtaufrollergehäuse 11 eingesetzter Gurtwelle 13 in der Ebene eines Gehäuseschenkels 12 zu liegen kommt, eine Ausnehmung 21 auf, durch welche ein im Inneren des Wellenkörpers 20 angeordnetes Sperrglied 22 mit seinen Zähnen 23 hindurchragt. Zusätzlich sind auf dem Außenumfang des Wellenkörpers 20 weitere Ausnehmungen 24 vorgesehen, die in einer im einzelnen noch zu beschreibenden Weise nutzbar sind.

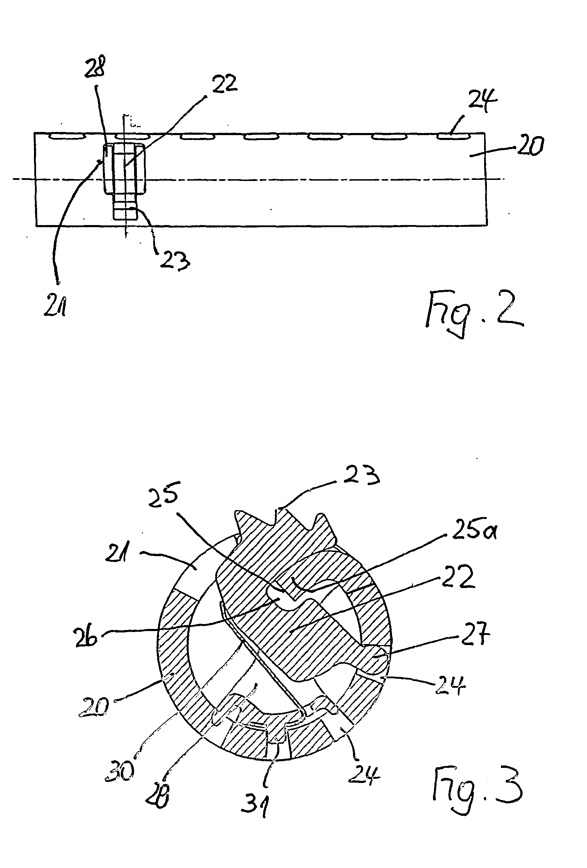

Wie sich hierzu aus Figur 3 entnehmen läßt, ist das Sperrglied 22 mit einem Lageransatz 27 in einer der angesprochenen Ausnehmungen 24 des Wellenkörpers 20 derart gelagert, daß das Sperrglied 22 um diese Lagerstelle einwärts verschwenken und dabei in die Ausnehmung 21 hineintauchen kann. Das Sperrglied 22 umschließt mit einer Tasche 26 einen als Wellennase 25 ausgebildeten Randbereich der Ausnehmung 21, wobei die Wellennase 25 einen in das Innere des Wellenkörpers 20 vorgebogenen Krümmungsbereich 25a aufweist.

Ferner ist im Inneren des Wellenkörpers 20 ein Halteteil 28 für eine Blattfeder 30 angeordnet, wobei die Blattfeder 30 am äußeren Umfang des Sperrgliedes 22 derart anliegt, daß die Blattfeder 30 das Sperrglied in dessen aus dem Wellenkörper 20 heraustretende Lage vorspannt.

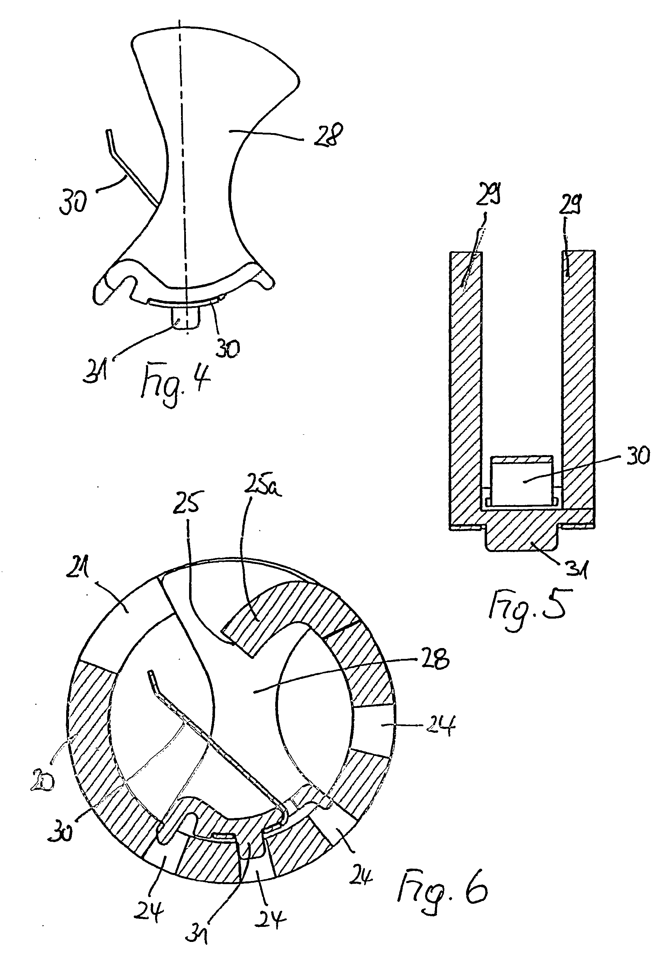

Wie sich im einzelnen aus den Figuren 4 bis 6 entnehmen läßt, ist das Halteteil 28 U-förmig mit U-Schenkeln 29 ausgebildet, wobei die U-Schenkel 29 im Montagezustand das Sperrglied 22 zwischen sich aufnehmen und bei dessen radialer Bewegung axial führen. Das Halteteil 28 ist über Haltevorsprünge 31 ebenfalls in Ausnehmungen 24 des Wellenkörpers 20 festlegbar. Hierzu zeigt insbesondere Figur 6 den Wellenkörper 20 mit dem darin vormontierten Halteteil 28.

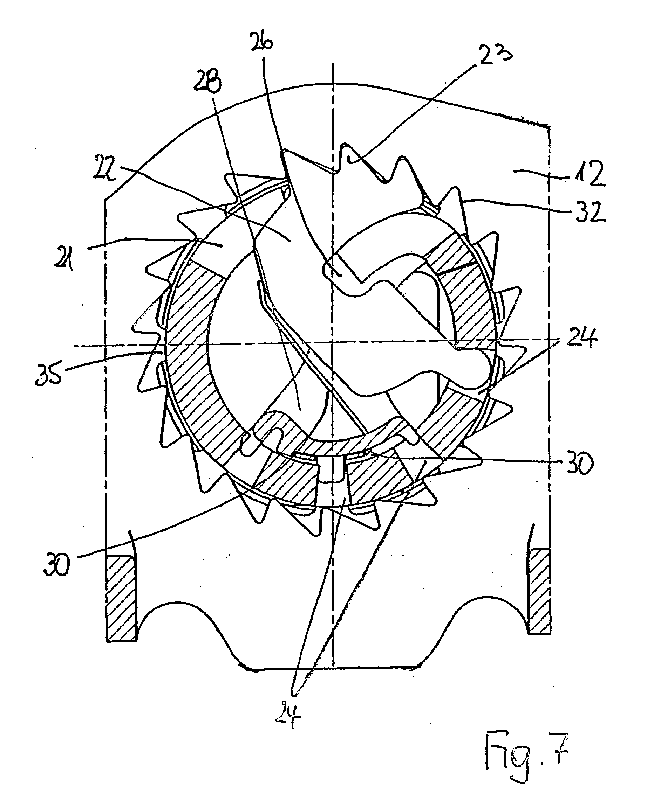

Aus Figur 7 ist das Zusammenwirken der in den Figuren 2 bis 6 dargestellten Blockiervorrichtung mit der in dem Gehäuseschenkel 12 des Gurtaufrollergehäuse 11 ausgebildeten Verzahnung 32 zu entnehmen, wobei die Gehäuseschenkel 12 des Gurtaufrollergehäuses 11 zur Lagerung der Gurtwelle 13 entsprechende Lageröffnungen 35 aufweisen. Der die Lageröffnung 35 umgebende Rand des für die Blockierung der Gurtwelle 13 herangezogenen Gehäuseschenkels 12 bildet in der Ebene des Gehäuseschenkels 12 die entsprechende Verzahnung 32 aus. Dabei ist aus Figur 7 erkennbar, daß aufgrund der Einwirkung der Blattfeder 30 das Sperrglied 22 in Eingriff mit der Verzahnung 32 gehalten ist. Wird nun die Gurtwelle in Straffrichtung, also bei der Darstellung der Figur 7 im Uhrzeigersinn gedreht, so führen die entsprechend angeordneten Zahnflanken der Verzahnung 32 wie auch der Zähne 23 des Sperrgliedes 22 das Sperrglied 22 entgegen der Vorspannung der Blattfeder 30 in die Ausnehmung 21 des Wellenkörpers 20 hinein, so daß das Sperrglied 22 mit seinen Zähnen 23 über die Verzahnung 32 des Gehäuseschenkels 12 hinüberratscht.

Kehrt sich nach Beendigung des Straffvorganges die Drehrichtung der Gurtwelle durch Zug am Gurtbandband 14 (Figur 1) um (entgegen dem Uhrzeigersinn), so erfolgt aufgrund des ständigen Eingriffs der Zähne 23 des Sperrgliedes in die Verzahnung 32 unmittelbar eine Blockierung der Gurtwelle 13 bzw. des Wellenkörpers 20, wobei sich das Sperrglied 22 mit seiner Tasche 26 auf dem Krümmungsbereich 25a der Wellennase 25 abstützt und diese Wellennase 25 in das Innere des Wellenkörpers 20 hinein einbiegt. Auf diese Weise fährt einerseits das Ende der Wellennase 25 mit Krümmungsbereich 25a in die Tasche 26 ein, so daß die Bewegungsfreiheit zwischen Sperrglied 22 und Wellenkörper 20 begrenzt wird. Weiterhin kommt es zu einer radialen Verlagerung des Wellenkörpers 20 entgegen dem Uhrzeigersinn, so daß sich nun insbesondere in dem der Wellennase 25 gegenüberliegenden Umfangsbereich die Verzahnung 32 in Eingriff mit den in Figur 7 dargestellten Ausnehmungen 24 des Wellenkörpers 20 bewegt und hier für eine zusätzliche Festlegung des Wellenkörpers 20 sorgt.

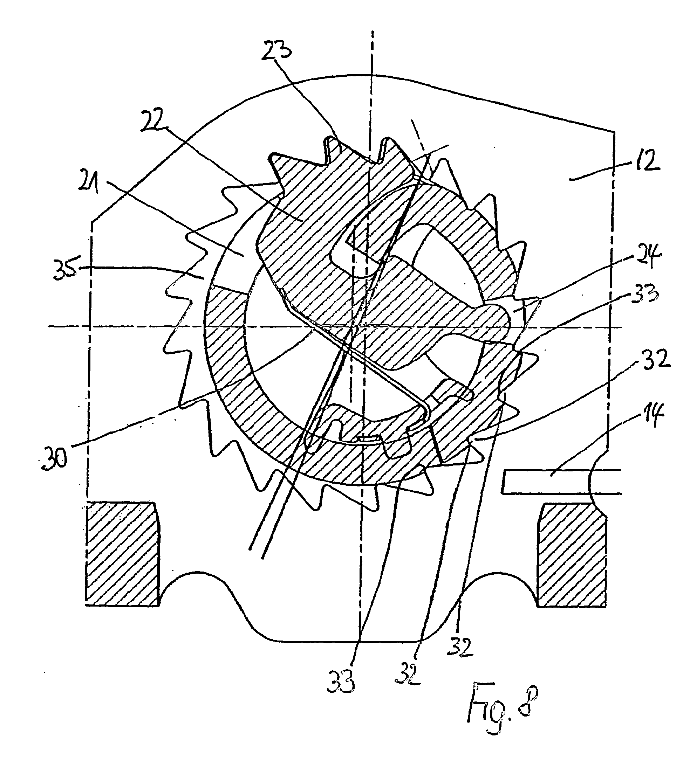

Diese Sperrlage ist in Figur 8 dargestellt, wobei bei dem in Figur 8 dargestellten Ausführungsbeispiel an die Stelle der Ausnehmungen 24 als Blockierkontur in dem Umfang des Wellenkörpers 20 eingeprägte Blockiersicken 33 getreten sind, in welche die Verzahnung 32 des Gehäuseschenkels 12 formschlüssig eintritt.

Damit ist eine sichere Blockierung der Gurtwelle 13 an dem Gurtaufrollergehäuse 11 im Lastfall gegeben.

## Patentansprüche

1. Rückhaltesystem für ein Kraftfahrzeug bestehend aus einem Sicherheitsgurt, dessen eines Ende mittels eines Endbeschlagstraffers (10) an der Fahrzeugkarosserie befestigbar ist, wobei der Endbeschlagstraffer aus einem das Ende des Sicherheitsgurtes aufnehmenden Gurtaufroller und einer daran angeschlossenen Straffvorrichtung (15) für die Gurtwelle (13) des Gurtaufrollers besteht, mit einer als Hohlwelle ausgebildeten Gurtwelle (13) und einem im Gefahrenfall ausgelösten Sperrglied (22) zur Blockierung der Gurtwelle (13) **dadurch gekennzeichnet, daß** sich der Wellenkörper (20) der eigentlichen Gurtwelle (13) durch die Gehäuseschenkel (12) des Gurtaufrollergehäuses (11) hindurcherstreckt und in der Ebene eines Gehäuseschenkels (12) eine Ausnehmung (21) aufweist, dass im Inneren des hohlen Wellenkörpers (20) ein Sperrglied (22) schwenkbar angeordnet ist, welches mit wenigstens einem Zahn (23) durch die Ausnehmung (21) über den Außenumfang des Wellenkörpers (20) hervorsteht und von einem im Inneren des Wellenkörpers (20) festgelegten Federelement (30) in Eingriff in eine am zugeordneten Gehäuseschenkel (12) des Gurtaufrollergehäuses (11) ausgebildete Verzahnung (32) vorgespannt ist und daß das Sperrglied (22) so ausgebildet ist, dass es bei Drehung der Gurtwelle (13) in Straffrichtung über die Verzahnung (32) hinwegratscht und bei einer nach Abschluss der Straffbewegung erfolgenden Drehung der Gurtwelle (30) in Gurtauszugsrichtung die sofortige Blockierung der Gurtwelle (13) bewirkt.

2. Rückhaltesystem nach Anspruch 1, **dadurch gekennzeichnet, daß** das mit einem Lageransatz (27) in einer Durchbrechung (24) des Wellenkörpers (20) gelagerte Sperrglied (22) sich im Eingriffszustand mit der Verzahnung (32) des Gurtaufrollergehäuses (11) an einem als Wellennase (25) ausgebildeten Randbereich der Ausnehmung (21) abstützt.

3. Rückhaltesystem nach Anspruch 2, **dadurch gekennzeichnet, daß** die Ausnehmung (21) in Umfangsrichtung des Wellenkörpers (20) eine derartige Erstreckung aufweist, daß das Sperrglied (22) mit seinem Zahn (23) beim Überratschen der Verzahnung (32) des Gurtaufrollergehäuses (11) in die Ausnehmung (21) eintauchen kann.

4. Rückhaltesystem nach Anspruch 2 oder 3, **dadurch gekennzeichnet, daß** das Sperrglied (22) mit einer Tasche (26) die Wellennase (25) derart umschließt, daß die Wellennase (25) unter Last in die Tasche (26) einfährt und der Bewegungsspielraum zwischen Sperrglied (22) und Wellenkörper (20) begrenzt ist.

5. Rückhaltesystem nach einem der Ansprüch 1 bis 4, **dadurch gekennzeichnet, daß** die Wellennase (25) einen einwärts in das Innere des Wellenkörpers (20) vorgebogenen Krümmungsbereich (25a) aufweist.

6. Rückhaltesystem nach Anspruch 5, **dadurch gekennzeichnet, daß** der Krümmungsbereich (25a) der Wellennase (25) unter Last in das Innere des Wellenkörpers (20) einbiegbar ausgebildet ist.

7. Rückhaltesystem nach einem der Ansprüche 1 bis 6, **dadurch gekennzeichnet, daß** auf dem äußeren Umfang des Wellenkörpers (20) eine zum Eingriff der Verzahnung (32) des Gurtaufrollergehäuses (11) eingerichtete Blockierkontur (24, 33) unmittelbar in dem Wellenkörper (20) ausgebildet ist.

8. Rückhaltesystem nach Anspruch 7, **dadurch gekennzeichnet, daß** über den Umfang des Wellenkörpers (20) verteilt eine Mehrzahl von Blockierkonturen (24, 33) angeordnet ist.

9. Rückhaltesystem nach Anspruch 7 oder 8, **dadurch gekennzeichnet, daß** die Blockierkontur als eine in den Wellenkörper (20) eingebrachte Ausnehmung (24) ausgebildet ist.

10. Rückhaltesystem nach Anspruch 7 oder 8, **dadurch gekennzeichnet, daß** die Blockierkontur aus einer in den Wellenkörper (20) eingeprägten Blockiersicke (33) besteht.

11. Rückhaltesystem nach einem der Ansprüche 1 bis 10, **dadurch gekennzeichnet, daß** das Sperrglied (22) durch eine im Inneren des Wellenkörpers (20) festgelegte Blattfeder (30) in Eingriff mit der Verzahnung (32) des Gurtaufrollergehäuses (11) vorgespannt ist.

12. Rückhaltesystem nach Anspruch 11, **dadurch gekennzeichnet, daß** die Blattfeder (30) in einem in das Innere des Wellenkörpers (20) eingesetzten Halteteil (28) festgelegt ist.

13. Rückhaltesystem nach Anspruch 12, **dadurch gekennzeichnet, daß** das Halteteil (28) in wenigstens einer in dem Wellenkörper (20) ausgebildeten Ausnehmung (24) festlegbar ist.

14. Rückhaltesystem nach Anspruch 12 oder 13, **dadurch gekennzeichnet, daß** das Halteteil (28) U-förmig ausgebildet ist und zwischen seinen U-Schenkeln (29) das Sperrglied (22) einfaßt und dieses axial führt.

15. Rückhaltesystem nach einem der Ansprüche 1 bis 14, **dadurch gekennzeichnet, daß** zur symmetrischen Blockierung der Gurtwelle (13) jeweils in der Ebene der die Gurtwelle (13) lagernden Gehäuseschenkel (12) des Gurtaufrollergehäuses (11) in dem Wellenkörper (20) jeweils ein Sperrglied (22) angeordnet und an den Gehäuseschenkeln (12) des Gurtaufrollergehäuses (11) jeweils eine Verzahnung (32) ausgebildet ist.

16. Rückhaltesystem nach einem der Ansprüche 1 bis 15, **dadurch gekennzeichnet, daß** der Wellenkörper (20) aus einem als ebener Zuschnitt ausgebildeten und in eine Rolle geformten Wellenmantel gebildet ist.

17. Rückhaltesystem nach Anspruch 16, **dadurch gekennzeichnet, daß** der Wellenmantel aus einem dünnen Stahlblech besteht.

## Claims

1. Restraint system for a vehicle comprising a seat belt, an end of which can be attached by means of an end tensioning device (10) to the vehicle body, whereby the end tensioning device comprises a seat belt retractor that takes up an end of the safety belt and a tensioning device (15) connected thereto for the belt shaft (13) of the seat belt roller, with a belt shaft (13) formed as a hollow haft and a blocking element (22) for blocking the belt shaft (13) that is released in the event of an accident, **characterized in that** the shaft body (20) of the actual belt shaft (13) extends through the housing leg (12) of the seat belt retractor housing (11) and has a recess (21) in the plane of a housing leg (12), **in that** in the interior of the hollow shaft body (20), a blocking element (22) is pivotably arranged, which projects through the recess (21) with at least one tooth (23) beyond the outer periphery of the shaft body (20) and is prestressed by a spring element positioned in the interior of the shaft body (20), into engagement in a toothing (32) formed on an associated housing leg (12) of the seat belt retractor housing (11), and that the blocking element (22) is formed so that it ratchets away over the toothing (32) upon rotation of the belt shaft (13) in the tensioning direction and during rotation of the belt shaft (30) taking place in the pull-out direction of the belt after completion of the tensioning movement, it effects the immediate blocking of the belt shaft (13).

2. Restraint system of claim 1, **characterized in that** the blocking element (22) supported with a bearing shoulder (27) in a through hole (24) of the shaft body (20) is braced in an engaged state with the toothing (32) of the seat belt retractor housing (11) on an edge region of the recess (21) formed as a shaft nose (25).

3. Restraint system of claim 2, **characterized in that** the recess (21) has a type of extension in the circumferential direction of the shaft body (20) such that the blocking element (22) can plunge into the recess (21) with its tooth (23) upon over-ratcheting of the toothing (32) of the seat belt retractor housing (11).

4. Restraint system of claim 2 or 3, **characterized in that** the blocking element (22) encompasses the shaft nose (25) with a pocket (26) so that the shaft nose (25) moves into the pocket (26) under a load and the movement space is defined between the blocking element (22) and the shaft body (20).

5. Restraint system of one of claims 1 through 4, **characterized in that** the shaft nose (25) has a curved region (25a) bent inward into the interior of the shaft body (20).

6. Restraint system of claim 5, **characterized in that** the curved region (25) of the shaft nose (25) is formed to be bent in under a load into the interior of the shaft body (20).

7. Restraint system of one of claims 1 through 6, **characterized in that** on the outer circumference of the shaft body (20), a blocking contour (24, 33) arranged for engagement in toothing (32) of the seat belt retractor housing (11) is formed directly in the shaft body (20).

8. Restraint system of claim 7, **characterized in that** a plurality of blocking contours (24, 33) is arranged over the circumference of the shaft body (20).

9. Restraint system of claim 7 or 8, **characterized in that** the blocking contour is formed as a recess formed in the shaft body (20).

10. Restraint system of claim 7 or 8, **characterized in that** the blocking contour comprises a blocking pleat (33) pressed into the shaft body (20).

11. Restraint system of one of claims 1 through 10, **characterized in that** the blocking element (22) is prestressed by means of a plate spring (3) fixed in the interior of the shaft body (20) that is engaged with the toothing (32) of the seat belt retractor housing (11).

12. Restraint system of claim 11, **characterized in that** the plate spring (30) is fixed in a holding part (28) placed in the interior of the shaft body (20).

13. Restraint system of claim 12, **characterized in that** the holding part (28) can be fixed in at least one recess (24) formed in the shaft body (20).

14. Restraint system of claim 12 or 13, **characterized in that** the holding part (28) is U-shaped and surrounds the blocking element (22) between its U-legs (29) and axially guides this.

15. Restraint system of one of claims 1 through 14, **characterized in that** for symmetrical blocking of the belt shaft (13), a blocking element (22) is arranged respectively in the plane of the housing leg (12) of the seat belt retractor housing (11) supporting the belt shaft (11) in the shaft body (20) and a toothing (32) is formed, respectively, on the housing legs (12) of the seat belt retractor housing (11).

16. Restraint system of one of claims 1 through 15, **characterized in that** the shaft body (20) is formed as a shaft jacket formed as a flat pre-cut part and formed into a roller.

17. Restraint system of claim 16, **characterized in that** the shaft jacket comprises a thin steel sheet.

## Revendications

1. Système de retenue pour un véhicule constitué d'une ceinture de sécurité dont une extrémité peut être fixée à la carrosserie d'un véhicule à l'aide d'un tendeur à ferrure d'extrémité (10), le tendeur à ferrure d'extrémité étant constitué d'un enrouleur de ceinture recevant l'extrémité de la ceinture de sécurité et d'un dispositif tendeur (15) raccordé à celui-ci pour l'arbre de ceinture (13) de l'enrouleur de ceinture, avec un arbre de ceinture (13) configuré comme un arbre creux et un élément de blocage (22) déclenché en cas de danger pour le blocage de l'arbre de ceinture (13), **caractérisé en ce que** le corps d'arbre (20) de l'arbre de ceinture proprement dit (13) traverse les montants de boîtier (12) du boîtier de l'enrouleur de ceinture (11) et comporte un creux (21) dans le plan d'un montant de boîtier (12), **en ce qu'**un élément de blocage (22) est placé de manière pivotante à l'intérieur du corps d'arbre creux (20), lequel élément déborde avec au moins une dent (23) à travers le creux (21) sur le pourtour extérieur du corps d'arbre (20) et est précontraint par un élément de ressort (30) fixé à l'intérieur du corps d'arbre (20) pour s'engrener dans une denture (32) formée dans le montant de boîtier (12) correspondant du boîtier de l'enrouleur de ceinture (11) et **en ce que** l'élément de blocage (22) est configuré de telle manière que, lors de la rotation de l'arbre de ceinture (13) dans le sens de tension, il s'encliquette sur la denture (32) et, lors d'une rotation de l'arbre de ceinture (13) dans le sens d'extraction de ceinture se produisant après l'achèvement du mouvement de tension, il provoque le blocage immédiat de l'arbre de ceinture (13).

2. Système de retenue selon la revendication 1, **caractérisé en ce que** l'élément de blocage (22) logé avec un épaulement de palier (27) dans une découpe (24) du corps d'arbre (20) s'appuie, lorsqu'il est engrené dans la denture (32) du boîtier de l'enrouleur de ceinture (11), sur une zone de bord du creux (21) configurée comme butoir d'arbre (25).

3. Système de retenue selon la revendication 2, **caractérisé en ce que** le creux (21) s'étend dans le sens circonférentiel du corps d'arbre (20) de telle manière que l'élément de blocage (22) peut s'enfoncer dans le creux (21) avec sa dent (23) lors de l'encliquetage de la denture (32) du boîtier de l'enrouleur de ceinture (11).

4. Système de retenue selon la revendication 2 ou 3, **caractérisé en ce que** l'élément de blocage (22) entoure le butoir d'arbre (25) avec une poche (26) de telle manière que le butoir d'arbre (25) en charge rentre dans la poche (26) et que le mouvement entre l'élément de blocage (22) et le corps d'arbre (20) est limité.

5. Système de retenue selon l'une quelconque des revendications 1 à 4, **caractérisé en ce que** le butoir d'arbre (25) présente une zone de courbure (25a) pré-incurvée à l'intérieur du corps d'arbre (20).

6. Système de retenue selon la revendication 5, **caractérisé en ce que** la zone de courbure (25a) du butoir d'arbre (25) en charge est conçue pour s'incurver à l'intérieur du corps d'arbre (20).

7. Système de retenue selon l'une quelconque des revendications 1 à 6, **caractérisé en ce qu'**un contour de blocage (24, 33) disposé sur le pourtour extérieur du corps d'arbre (20) pour l'engrènement de la denture (32) du boîtier de l'enrouleur de ceinture (11) est formé directement dans le corps d'arbre (20).

8. Système de retenue selon la revendication 7, **caractérisé en ce qu'**une pluralité de contours de blocage (24, 33) est répartie sur le pourtour du corps d'arbre (20).

9. Système de retenue selon la revendication 7 ou 8, **caractérisé en ce que** le contour de blocage est configuré comme un creux (24) ménagé dans le corps d'arbre (20).

10. Système de retenue selon la revendication 7 ou 8, **caractérisé en ce que** le contour de blocage est constitué par une moulure de blocage (33) gravée dans le corps d'arbre (20).

11. Système de retenue selon l'une quelconque des revendications 1 à 10, **caractérisé en ce que** l'élément de blocage (22) est précontraint par un ressort à lames (30) fixé à l'intérieur du corps d'arbre (20) pour s'engrener dans la denture (32) du boîtier de l'enrouleur de ceinture (11).

12. Système de retenue selon la revendication 11, **caractérisé en ce que** le ressort à lames (30) est fixé dans une pièce de retenue (28) insérée à l'intérieur du corps d'arbre (20).

13. Système de retenue selon la revendication 12, **caractérisé en ce que** la pièce de retenue (28) peut être fixée dans au moins un creux (24) formé dans le corps d'arbre (20).

14. Système de retenue selon la revendication 12 ou 13, **caractérisé en ce que** la pièce de retenue (28) a une forme en U et entoure l'élément de blocage (22) entre ses montants en U (29) et le guide dans le sens axial.

15. Système de retenue selon l'une quelconque des revendications 1 à 14, **caractérisé en ce que**, pour le blocage symétrique de l'arbre de ceinture (13) dans le plan des montants de boîtier (12) du boîtier de l'enrouleur de ceinture (11), dans lesquels est logé l'arbre de ceinture (13), un élément de blocage (22) est disposé dans le corps d'arbre (20) et une denture (32) est formée dans les montants de boîtier (12) du boîtier de l'enrouleur de ceinture (11).

16. Système de retenue selon l'une quelconque des revendications 1 à 15, **caractérisé en ce que** le corps d'arbre (20) est constitué par une enveloppe d'arbre configurée comme une découpe plane et façonnée pour former un rouleau.

17. Système de retenue selon la revendication 16, **caractérisé en ce que** l'enveloppe d'arbre est faite en une tôle d'acier mince.
